Europäisches Patentamt

European Patent Office

Office européen des brevets

(11) Veröffentlichungsnummer: **0 470 414 A2**

# EUROPÄISCHE PATENTANMELDUNG

(21) Anmeldenummer: **91112115.0**

(51) Int. Cl.⁵: **H01S 3/03**

(22) Anmeldetag: **19.07.91**

(30) Priorität: **07.08.90 DE 4025047**

(43) Veröffentlichungstag der Anmeldung:
**12.02.92 Patentblatt 92/07**

(84) Benannte Vertragsstaaten:
**DE FR GB IT**

(71) Anmelder: **SIEMENS AKTIENGESELLSCHAFT**
**Wittelsbacherplatz 2**
**W-8000 München 2(DE)**

(72) Erfinder: **Welsch, Wolfgang Dr.,Ing.**
**Fuchsweg 25b**
**W-8011 Baldham(DE)**
Erfinder: **Krüger, Hans, Dipl.-Phys.**
**Peralohstrasse 13**
**W-8000 München 83(DE)**

(54) **Verfahren zur Herstellung eines vakuumdicht verschlossenen Gaslasers.**

(57) Das gleichzeitige Auspumpen und Verschließen einer größeren Zahl von Gaslasern (1) wird durch ein Verfahren ermöglicht, bei dem die Laser (1) mit Pumpröhrchen (3) versehen werden, bei dem mehrere Laser (1) in einem Vakuumgefäß angeordnet werden, bei dem dieses evakuiert, ausgeheizt und das Lasergas eingeblasen wird, bei dem die Pumpröhrchen (3) im Vakuumgefäß (10) mit Weichlot (11) zugelötet werden, bei dem die Laser (1) aus dem Vakuumgefäß (10) entnommen und die Pumpröhrchen (3) zwischen dem Weichlotverschluß und dem Laser (1) abgequetscht und dabei kaltverschweißt werden, wobei der überstehende Teil der Pumpröhrchen (3) abgetrennt wird.

Das erfindungsgemäße Verfahren wurde entwikkelt für Gaslaser, insbesondere He-Ne- oder Ar-Laser.

FIG 1

EP 0 470 414 A2

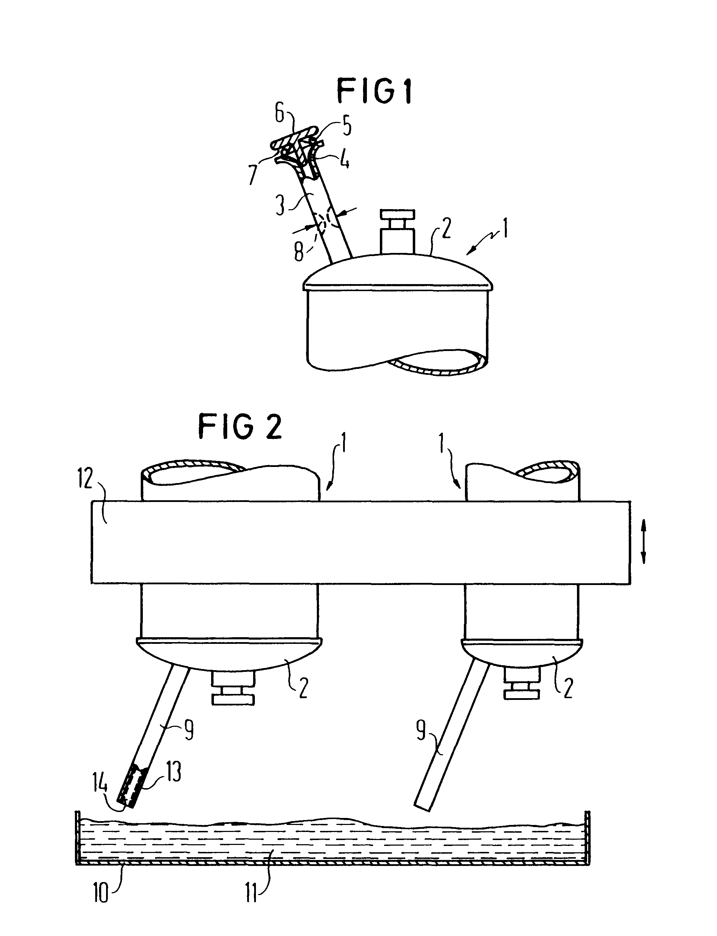

Die vorliegende Erfindung betrifft ein Verfahren zur Herstellung eines vakuumdicht verschlossenen Gaslasers nach dem Oberbegriff des Patentanspruchs 1. Ein nach einem derartigen Verfahren verschlossener Gaslaser ist aus dem Siemens Prospekt 1986/87 "Für die He-Ne-Lasertechnik: Röhren, Module, Stromversorgungen" bekannt. Die dort auf der Titelseite und beispielsweise in FIG 1 dargestellten Laser weisen Pumpröhrchen auf, welches an seinem Ende abgequetscht und dadurch vakuumdicht verschlossen ist.

Beim Stand der Technik müssen derartige Laser mit sogenannten Pumpstengeln versehen werden, die aus einem Röhrchen und einer an dessen Ende befindlichen Verstärkung gebildet sind und die einzeln an einem Pumpstand angeklemmt werden müssen, um die Verfahrensschritte Evakuieren, Ausheizen und Füllen durchführen zu können.

Demgegenüber besteht die Aufgabe, die der vorliegenden Erfindung zugrundeliegt, in einer Vereinfachung des Herstellungsverfahrens für derartige Laser. Diese Aufgabe wird bei Lasern gemäß dem Oberbegriff von Patentanspruch 1 durch die kennzeichnenden Merkmale des Patentanspruchs 1 gelöst. Ein Weichlotverschluß ist im Vakuumgefäß herstellbar und das nachträgliche Abquetschen und Kaltverschweißen garantiert die vom Kunden geforderte und erprobte hohe Qualität der vakuumdichten Verbindung.

Eine vorteilhafte Ausgestaltung des erfindungsgemäßen Verfahrens besteht darin, daß die Spiegel der Laser vor dem Abquetschen der Pumprohre justiert werden und daß dabei als nicht gasdicht erkannte Laser durch Aufschmelzen des Weichlotverschlusses einer Nacharbeit zugänglich gemacht werden. Nach dem Abquetschen und Kaltverschweißen des Röhrchens ist eine Nacharbeit und ein anschließendes neuerliches Füllen eines Lasers praktisch nicht mehr möglich.

Vorteilhaft wird das Ende des Pumpröhrchens flanschartig aufgebördelt, ein Lotring auf das Ende aufgelegt und ein Stöpsel in den Lotring und das Ende eingesteckt, wobei der Lotring so geformt ist, daß zumindest ein Luftspalt zum Innenraum des Pumpröhrchens hin freibleibt. Diese Anordnung wird in einen Vakuumkessel eingesetzt, evakuiert, ausgeheizt und mit Lasergas gefüllt und schließlich wird die Temperatur im Vakuumkessel auf die Löttemperatur erhöht, so daß unter dem Einfluß der Schwerkraft der Stöpsel in das erweichende Lot einsinkt und das Pumpröhrchen nach Abkühlung vakuumdicht verschließt. Diese Ausführungsform erfordert einen geringen apparativen Aufwand, sie kann im sowieso vorhandenen Vakuumkessel durchgeführt werden. Für größere Stückzahlen eignet sich ein Verfahren, in dem mehrere Laser im Vakuumkessel in eine Halterung so eingesetzt werden, daß die Pumpröhrchen nach unten ragen, in dem unter den Pumpröhrchen ein Gefäß mit Weichlot angeordnet ist, in dem das Weichlot auf Löttemperatur gebracht wird, in dem nach dem Auspumpen, Ausheizen und Füllen die Halterung abgesenkt wird, bis die Enden der Pumpröhrchen in das flüssige Weichlot eintauchen und dann wieder angehoben wird und in dem nach dem Erstarren des Weichlotes in den Pumpröhrchen die Laser aus dem Vakuumgefäß entnommen und die Pumpröhrchen abgequetscht werden. Dabei wird während der Zeit, in der die Pumpröhrchen in das Lot eingetaucht sind, vorteilhaft die Temperatur im Vakuumgefäß abgesenkt. Dadurch steigt das Weichlot infolge des mit der Temperatur abnehmenden Gasdrukkes im Laser definiert weit in die Pumpröhrchen hinein.

Zur besseren Benetzbarkeit der Pumpröhrchen sind diese vorteilhaft zumindest in ihren vom Weichlot benetzten Endbereichen mit einer Schicht aus Silber/Palladium oder Gold versehen.

Die Erfindung wird nun anhand von zwei Figuren näher erläutert.

Die Figuren zeigen Beispiele von erfindungsgemäßen Anordnungen von Lasern, die, in einem Vakuumkessel eingesetzt, zur Durchführung des erfindungsgemäßen Verfahrens geeignet sind, in teilweise geschnittener und gebrochener Ansicht schematisch.

FIG 1 zeigt einen Laser 1 mit einer Endkappe 2 aus Metall, mit der ein Pumpröhrchen 3 vakuumdicht verbunden ist. Das Ende 4 des Pumpröhrchens 3 ist flanschartig aufgeweitet. Auf dieses Ende 4 ist ein Lotring 5 aufgelegt, welcher in Umfangsrichtung wellig verbogen ist. In diesen Lotring 5 ist ein Stöpsel 6 eingesetzt, welcher bis in das Pumpröhrchen 3 hineinragt und dadurch gegen Verrutschen gesichert ist. Der Lotring 5 weist eine in Umfangsrichtung wellige Form auf, so daß Spalte 7 freibleiben, durch die der Laser evakuiert und Lasergas eingelassen werden kann. Nach dem Füllen des Lasers wird die Anordnung auf Löttemperatur erwärmt, der Lotring 5 schmilzt, der Stöpsel 6 sinkt in das Lot ein, nach einer folgenden Abkühlung entsteht eine vakuumdichte Verbindung im Endbereich des Pumpröhrchens. Der Stöpsel 6 kann wieder aus dem Pumpröhrchen entfernt werden, indem der Laser gekippt und die Lötstelle auf Löttemperatur erwärmt wird. Dadurch ist eine Möglichkeit geschaffen, bei der Fertigung entstehenden Ausschuß wegen ungenügender Vakuumdichtigkeit nochmals zu öffnen, nachzuarbeiten und wiederum zu verschließen.

Nach Prüfung des Lasers wird das Pumpröhrchen an der Quetschzone 8 in Pfeilrichtung zusammengequetscht, kaltverschweißt und abgetrennt. Dadurch ist die bekannte und anerkannt hohe Langzeitbeständigkeit des Vakuums gewährleistet.

Gemäß FIG 2 sind mehrere Laser 1 in einer Halterung 12 gehalten. An Endkappen 2 sind Pumpröhrchen 9 befestigt, die als gerade Röhrchen ausgeführt sein können. Unter den Pumpröhrchen 9 steht ein Gefäß 10 mit Lot 11. Die Röhrchen 9 tauchen nicht in das Lot 11 ein. Diese Anordnung wird in ein Vakuumgefäß eingebracht, nach dem Abpumpen, Ausheizen und Füllen des Vakuumgefäßes mit Lasergas wird die Halterung 12 in Pfeilrichtung gesenkt, bis die Röhrchen 9 in das nun auf Löttemperatur befindliche, flüßige Lot 11 eintauchen. Das Lot 11 steigt in die Röhrchen 9 hoch, Die Halterung 12 wird in Pfeilrichtung wieder angehoben, das Lot erstarrt und verschließt die Pumpröhrchen 9 vakuumdicht. Um das Hochsteigen des Lotes 11 in die Pumpröhrchen 9 zu begünstigen, wird vorteilhafterweise die Temperatur der Laser gesenkt, während die Röhrchen 9 in das Lot 11 eintauchen. Dadurch entsteht eine Druckverminderung im Laser, das Lot wird in die Röhrchen hineingedrückt. Eine weiter verbesserte Ausführungsform ist gegeben, wenn die Röhrchen 9 in ihrem Endbereich an ihren Innenwänden Gold-, Silber- oder Silber/Palladiumschichten 14 aufweisen. Insbesondere die Silber/Palladiumschichten sind einerseits auch nach Wärmebehandlung an Luft (z.B. beim Ausheizen) noch gut lötbar und lösen sich andererseits nicht im Weichlot, so daß an die Führung des Lötvorganges (Zeit, Temperatur) keine besonderen Anforderungen gestellt werden müssen.

## Patentansprüche

1. Verfahren zur Herstellung eines vakuumdicht verschlossenen Gaslasers, bei dem der Gaslaser mit einem Pumpröhrchen versehen wird, bei dem der Laser überr das Pumpröhrchen evakuiert und mit Lasergas gefüllt wird, **dadurch gekennzeichnet,** daß mehrere Laser in einem Vakuumgefäß angeordnet werden, daß das Vakuumgefäß evakuiert und zum Ausheizen der Laser erwärmt wird, daß anschließend in das Vakuumgefäß Lasergas eingeführt wird, daß die Pumpröhrchen noch im Vakuumgefäß mittels Weichlotes vakuumdicht verschlossen werden und daß nach der Entnahme die Röhrchen zwischen dem Weichlotverschluß und dem Lasergehäuse abgequetscht und dadurch vakuumdicht kaltverschweißt und die über die Schweißstelle hinausragenden Teile der Pumpröhrchen agbetrennt werden.

2. Verfahren nach Anspruch 1, **dadurch gekennzeichnet,** daß Resonatorspiegel der Laser vor dem Abquetschen der Pumpröhrchen justiert werden und daß dabei als nicht gasdicht erkennbare Laser durch Aufschmelzen des Weichlotverschlusses einer Nacharbeit zugängig gemacht werden.

3. Verfahren nach einem der Ansprüche 1 oder 2, **dadurch gekennzeichnet,** daß das Ende des Pumpröhrchens flanschartig aufgebördelt wird, daß ein Lotring auf das Ende aufgelegt und ein Stöpsel in dem Ring und das Ende eingesteckt wird, wobei der Lotring und/oder der Stöpsel und/oder das flanschartige Ende des Pumpröhrchens so geformt sind, daß zumindest ein Luftspalt zum Innenraum der Pumpröhrchen hin freibleibt, daß diese Anordnung in ein Vakuumgefäß eingesetzt, evakuiert, ausgeheizt und mit Lasergas gefüllt wird und daß dann die Temperatur im Vakuumkessel auf die Löttemperatur erhöht wird, so daß unter dem Einfluß der Schwerkraft der Stöpsel in das erweichende Lot einsinkt und das Pumpröhrchen nach einer darauf folgenden Abkühlung und dem Erstarren des Lotes vakuumdicht abschließt.

4. Verfahren nach einem der Ansprüche 1 bis 2, **dadurch gekennzeichnet,** daß mehrere Laser im Vakuumkessel in eine Halterung so eingesetzt werden, daß die Pumpröhrchen nach unten ragen, daß unter den Pumpröhrchen ein Gefäß mit Weichlot angeordnet ist, daß das Weichlot auf Löttemperatur gebracht wird, daß nach dem Auspumpen, Ausheizen und Füllen die Halterung abgesenkt wird, bis die Enden der Pumpröhrchen in das flüssige Weichlot eintauchen, und dann wieder angehoben wird, daß nach dem Erstarren des Weichlotes in den Pumpröhrchen die Laser aus dem Vakuumgefäß entnommen und die Pumpröhrchen abgequetscht werden.

5. Verfahren nach Anspruch 4, **dadurch gekennzeichnet,** daß die Temperatur im Vakuumgefäß während der Zeit, in der die Pumpröhrchen in das Lot eingetaucht sind, abgesenkt wird.

6. Verfahren nach einem der Ansprüche 1 bis 5, **dadurch gekennzeichnet,** daß die Pumpröhrchen zumindest in ihren vom Weichlot zu benetzenden Endbereichen mit einer Schicht aus Silber/Palladium überzogen werden.

## FIG 1

## FIG 2